# EUROPÄISCHE PATENTSCHRIFT

(11) **EP 1 322 843 B1**
(45) Veröffentlichungstag und Bekanntmachung des Hinweises auf die Patenterteilung: **13.05.2009**
(21) Anmeldenummer: 01985282.1
(22) Anmeldetag: 24.09.2001
(51) Int. Cl.: F01N 3/20

(54) **VORRICHTUNG ZUR DOSIERUNG EINES REDUKTIONSMITTELS**
DEVICE FOR THE DOSING OF A REDUCING AGENT
DISPOSITIF POUR LE DOSAGE D'UN AGENT DE REDUCTION

(30) Priorität: 22.09.2000 DE 10047531
(43) Veröffentlichungstag der Anmeldung: 02.07.2003
(73) Patentinhaber: ROBERT BOSCH GMBH, 70442 Stuttgart (DE)
(72) Erfinder: HUBER, Sven, 83404 Ainring-Mitterfelden (DE); MAYER, Hanspeter, A-2753 Markt Piesting (AT); MUELLER, Gerhard, 83395 Freilassing (DE); OFFENHUBER, Michael, A-5421 Adnet (AT); MOELL, Alexander, (DE)
(86) Internationale Anmeldenummer: PCT/DE2001/003663
(87) Internationale Veröffentlichungsnummer: WO 2002/025075

(56) Entgegenhaltungen:
- WO-A-96/36797
- WO-A-99/58230
- DE-C- 19 743 302
- US-A- 6 063 350

## Beschreibung

### Stand der Technik

Die Erfindung geht aus von einer Vorrichtung zur Dosierung eines Reduktionsmittels, insbesondere eines Harnstoffs bzw. einer Harnstoff-Wasser-Lösung im Rahmen einer katalytischen Abgasnachbehandlung, nach der Gattung des Anspruchs 1.

Um eine Verminderung von NO_{X}-Bestandteilen in Abgasen zu erzielen, wurden insbesondere für Dieselmotoren Reduktionskatalysatoren entwickelt, die üblicherweise in sogenannte SCR-Katalysatoren (engl. "Selective Catalytic Reduction") und Speicherkatalysatoren unterteilt werden. Die sogenannten SCR-Katalysatoren werden mittels einer Harnstoff- und/oder Ammoniakreduktionsmittelzufuhr regeneriert, während die sogenannten Speicherkatalysatoren mit Kohlenwasserstoffen des mitgeführten Brennkraftmaschinen-Brennstoffs in sogenannten Abgasfettphasen regeneriert werden.

Die WO 96/36797 beschreibt ein Dosiersystem für eine Harnstoff-Wasser-Lösung, bei dem eine Vormischkammer einen Gehäuseblock mit einer durchgehenden zentralen Längsbohrung aufweist.

Es ist bekannt, die verschiedenen Bauteile eines Dosiersystems über Schlauchleitungen miteinander zu verbinden. Aus der deutschen Patentanmeldung mit dem Aktenzeichen 199 46 900.8 ist eine Einrichtung bekannt, welche zum Entfernen von Stickoxiden in Abgasen beispielsweise aus einem Dieselmotor Harnstoff als Reduktionsmittel zudosiert. Hierfür vorgesehene Mittel sind teilweise an einem Block aus Kunststoff oder aus einem metallischen Werkstoff befestigt beziehungsweise in diesem integriert. Das beschriebene Dosiersystem ist relativ groß und aufwendig in der Herstellung, da es aus mehreren hintereinander angeordneten Komponenten besteht.

### Vorteile der Erfindung

Die erfindungsgemäße Dosiervorrichtung mit den kennzeichnenden Merkmalen des Anspruchs 1 hat demgegenüber den Vorteil einer einfachen und robusten Leitungsführung mit einer minmalen Anzahl an Dichtstellen, die kostengünstig und in Großserie herstellbar ist. Das Vorhandensein nur weniger Dichtstellen bedeutet eine geringere Gefahr von Undichtheiten und daher auch ein geringeres Ausfallrisiko. Schlauchleitungen und separate Leitungsverschraubungen können entfallen. Durch die kleinere Zahl benötigter Bauteile und der Baugröße verringert sich der Montageaufwand, das Gesamtbauvolumen verkleinert sich und senkt somit die Herstell- und die Systemkosten. Die Baueinheit ist vormontiert beispielsweise bezüglich der Dichtheit prüfbar, was zu geringeren Ausschußkosten gegenüber einer Fehlererkennung bei einer System-Endprüfung führt. Die Aussparungen können verschiedenartig angeordnet sein, beispielsweise in Form von Bohrungen, wobei durch zusätzliche Bohrungen die Grundfunktionen der Dosiervorrichtung durch Anbringen weiterer Bauteile erweiterbar ist. Das Vorsehen von Aussparungen in einem Gehäuseblock ermöglicht ein Anbringen der Dosiermittel und weiterer Funktionskomponenten am Gehäuseblock; die Länge der mit Reduktionsmittel gefüllten Leitung wird dadurch kurz gehalten, so daß die Flüssigkeit nach Eisbildung schnell wieder aufgetaut werden kann. Kurze Leitungsführungen sind auch schnell befüllt und es kann schnell der für den Betrieb notwendige Druck aufgebaut werden.

Ferner werden ausgleichende beziehungsweise federnde Elemente in der Anordnung integriert, so daß ein gefrierresistentes Dosiersystem bereitgestellt wird kann, das nach Gefrier-und Auftauzyklen dicht bleibt und die integrierten Bauteile vor Zerstörungen aufgrund von Eisbildungen schützt. Dabei müssen die einzelnen Komponenten an sich nicht vollständig gefrierfest ausgeführt sein.

Durch die in den abhängigen Ansprüchen aufgeführten Maßnahmen sind vorteilhafte Weiterbildungen und Verbesserungen der im Anspruch 1 angegebenen Dosiervorrichtung möglich. Besonders vorteilhaft ist es, sämtliche Mittel über zumindest eine geradlinige Versorgungsleitung miteinander zu verbinden, die den ganzen Gehäuseblock durchquert. Diese Leitungsführung ist einfach herstellbar und ermöglicht eine geschickte Anordnung miteinander zu verbindender Komponenten. Sie ist darüber hinaus in einfacher Weise als spritzgegossene Bohrung beispielsweise in einem Kunststoffblock ausführbar, der die verschiedenen Systemkomponenten aufnimmt.

Die offenen Leitungsenden können in vorteilhafter Weise durch Funktionskomponenten verschlossen werden, so daß keine separaten Verschlußelemente wie beispielsweise Verschlußschrauben notwendig sind.

Ein insbesondere achsparallel zur Aussparung eingebrachtes Heizelement, beispielsweise ein als elektrischer Widerstand ausgebildeter elektrischer Heizstab, kann eine zentrale Leitung vorteilhaft schnell beheizen, um eine gefrorene Flüssigkeit aufzutauen oder die Vorrichtung vor dem Einfrieren zu schützen. Alternativ oder in Kombination mit dem elektrischen Heizstab kann der Gehäuseblock auch aus einem elektrisch leitfähigen Material, insbesondere einem elektrisch leitfähigem Kunststoff, bestehen, der wie in der deutschen Patentanmeldung 1 99 46 900.8 beschrieben, mit mit einer elektrischen Spannung beaufschlagbaren Elektroden versehen ist, um über den Gehäuseblock einen elektrischen Strom zur Erwärmung der gesamten Anordnung zu erzielen.

In vorteilhafter Weise wird das Material des Gehäuseblocks so gewählt, daß aufgrund eines kleinen Elastitzitätsmoduls des Materials dieses zum Volumenausgleich bei Eisbildungen in der Leitung beitragen kann.

Ferner können auch nicht hochdruckfeste Werkstoffe insbesondere für den Gehäuseblock verwendet werden, da der Aufbau zu hoher Druckkräfte in Extremsituationen wie dem Eingefrieren vermieden wird.

### Zeichnung

Ausführungsbeispiele der Erfindung sind in der Zeichnung dargestellt und in der nachfolgenden Beschreibung näher erläutert. Es zeigen
- Figur 1: das Funktionsschema einer Dosiervorrichtung,
- Figur 2: in einem mit Aussparungen versehenen Gehäuseblock integrierte Komponenten einer Dosiervorrichtung,
- Figur 3: die Detailansicht einer weiteren Ausführungsform der Erfindung und
- Figur 4: eine weitere Detailansicht.

### Beschreibung der Ausführungsbeispiele

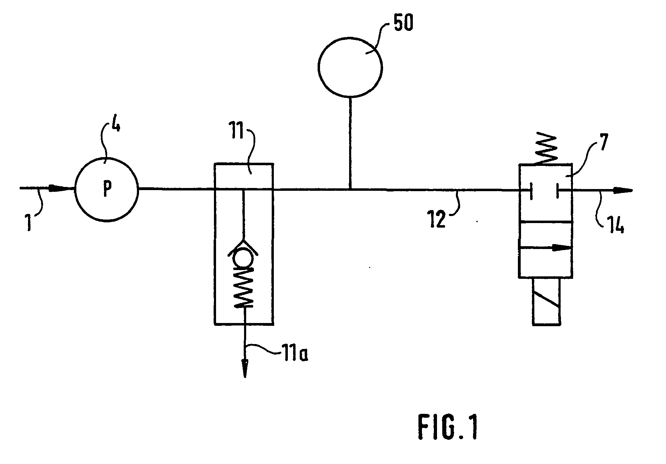

In Fig. 1 ist mit 1 der Eingang der Dosiervorrichtung bezeichnet, über den der Vorrichtung eine Harnstoff-Wasser-Lösung zugeführt wird. Eine Dosierpumpe 4 saugt die Flüssigkeit an. Die Pumpe 4 ist über einen Schrittmotor 4a drehzahlgesteuert. Ein Druckregler 11 führt eine zuviel geförderte Flüssigkeitsmenge über den Ausgang 11a des Druckreglers entweder zurück an den Eingang der Dosiervorrichtung beziehungsweise der Dosierpumpe oder zu einem nicht näher dargestellten Harnstofftank, aus dem die Dosierpumpe 4 über den Eingang 1 gespeist wird. Die den Eingang 1, die Pumpe 4 und den Druckregler 11 verbindende Leitung 12 führt die geförderte Flüssigkeit weiter zu einem Dosierventil 7. Vor dem Dosierventil ist ein Drucksensor 50 zur Messung des Drucks in der Leitung 12 angebracht. Das Dosierventil ist elektrisch ansteuerbar und gibt die Flüssigkeit entsprechend der elektrischen Ansteuerung an an den Ausgang 14 angeschlossene Komponenten ab. Dies ist beispielsweise eine nicht näher dargestellte, jedoch in der deutschen Anmeldung mit dem Aktenzeichen 1 99 46 900.8 bereits beschriebene Mischkammer, der aus einem Druckluftbehälter Druckluft zuführbar ist zur Ausbildung eines Aersols aus der Harnstoff-Wasser-Lösung, das anschließend in den Eingangsbereich insbesondere eines Kraftfahrzeug-Abgaskatalysators eingespritzt werden kann.

Die Dosierpumpe 4 dosiert entsprechend des angewandten Reduktionsverfahrens die erforderliche Menge an Harnstoffwasserlösung. Ein nicht näher dargestelltes Steuergerät erfaßt hierzu Daten über den Motorbetriebszustand, die von einem übergeordneten Motorsteuergerät über eine CAN-Datenleitung empfangen werden, sowie die Signale diverser, hier nicht näher beschriebener Druck-, Temperatur- bzw. Füllstandsensoren.

Das Steuergerät berechnet aus den Sensorinformationen und den Informationen aus dem Motorsteuergerät eine Harnstoffdosiermenge und steuert das Dosierventil entsprechend an.

In einer alternativen Ausführungsform kann das Reduktionsmittel vom Einspritzventil 7 auch direkt in den Eingangsbereich des Katalysators eingespritzt werden, also ohne Druckluftunterstützung beziehungsweise ohne eine Mischkammer vorzusehen.

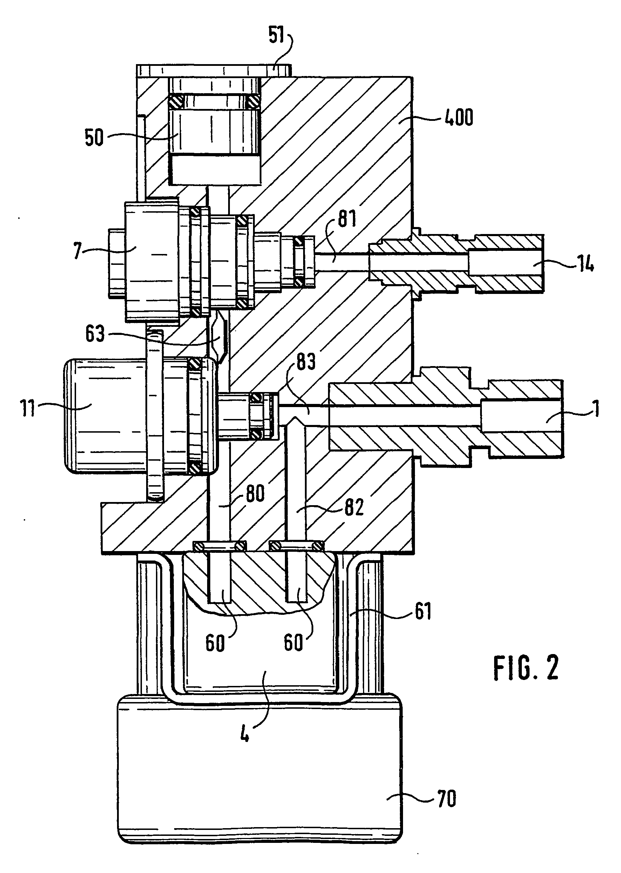

Fig. 2 zeigt eine Querschnittsansicht durch eine erfindungsgemäße Dosiervorrichtung, die einen Gehäuseblock 400 aus insbesondere elektrisch leitfähigem Kunststoff mit einem Elastizitätsmodul zwischen zirka 1000 N/mm² und zirka 7000 N/mm² aufweist. Der Gehäuseblock weist Aussparungen in Form von Bohrungen 80, 81, 82 und 83 auf, die die in Figur 1 dargestellte Reduktionsmittel-Leitung 12 bilden. Die Bohrung 80 durchquert den gesamten Block. Die Pumpenleitungen 60 der Dosierpumpe 4 sind über O-Dichtringe an den Enden der Bohrungen 80 beziehungsweise 82 angeschlossen, wobei die Pumpe über einen elastischen Blechwinkel 61 an der Oberfläche des Gehäuseblocks befestigt ist. Ein eine bei Eisbildung druckausgleichend wirkende, nicht näher dargestellte Membran aufweisender Druckregler 11 ist an der Oberfläche des Gehäuseblocks angeflanscht, wobei zwei O-Dichtringe den in den Gehäuseblock hineinragenden Kopf des Druckreglers abdichten. Analog ist ein Dosierventil 7 am Gehäuseblock befestigt. Am der Dosierpumpe 4 gegenüberliegenden Ende des Gehäuseblocks geht die Bohrung 80 in einen Bereich mit größerem Querschnitt über, in dem ein Drucksensor 50 eingebracht ist. Er ist an der Oberfläche des Gehäuseblocks über einen biegeweichen, elastischen Flansch 51 befestigt. Auch hier gewährleisten O-Ringe eine Abdichtung der mit einer Flüssigkeit befüllbaren Bohrung.

Das Dosierventil 7 ist über die Bohrung 81 mit dem angeflanschten Ausgang 140 der Dosiervorrichtung verbunden. Der daneben angeflanschte Eingang 1 steht mit den Bohrungen 83 und 82 in Verbindung und dient zur Zuführung des Reduktionsmittels aus einem Vorratsbehälter zur Dosierpumpe 4. In der Bohrung 80 befindet sich zwischen dem Druckregler 11 und dem Dosierventil 7 ein luftgefüllter, elastischer Schlauch 63, der an der Bohrungswandung beispielsweise mittels eines Klebstoffs befestigt ist. Oberhalb der Dosierpumpe ist der elektrische Pumpenmotor angeordnet, der ebenfalls am Gehäuseblock 400 befestigt ist. Ein nicht näher dargestelltes Steuergerät ist elektrisch in nicht näher dargestellter Weise sowohl mit dem Dosierventil und dem Drucksensor als auch mit weiteren nicht näher dargestellten Sensoren wie einem Füllstandssensor des Harnstofftanks verbunden und erhält von einem Motorsteuergerät Daten über den Betriebszustand des Motors, dessen Abgase mithilfe der Dosiervorrichtung im Abgastrakt chemisch reduziert werden sollen.

Der Gehäuseblock 400 dient zur Aufnahme und Befestigung verschiedener Mittel zur Reduktionsmittelzufuhr beziehungsweise weiterer Funktionskomponenten, wie den Drucksensor 50, das Dosierventil 7, den Druckregler 11 und die Dosierpumpe 4. Die geradlinige Bohrung 80 durchquert den Gehäuseblock von einem zum anderen Ende und kann fertigungsgerecht ausgeführt sein, beispielsweise konisch oder gestuft im Falle eines Kunststoffblocks oder zylindrisch für eine spanende Bearbeitung im Falle eines metallischen Gehäuseblocks. Ergänzend sind weitere Bohrungen 81 bis 83 vorgesehen, die teilweise parallel und teilweise senkrecht zur durchgängigen Bohrung 80 verlaufen und die die Anbindung der Anordnung an einen Reduktionsmittel-Vorratsbehälter und den Katalysator beziehungsweise den Druckausgleich über den Druckregler 11 gewährleisten. Der Druckregler 11 und das Dosierventil 7 ragen mit ihren in der Zeichnung nicht ersichtlichen Leitungsanschlüssen in die Bohrung 80 hinein, so daß diese jeweils mit der Bohrung verbunden sind; gleichzeitig verschließen sie die Bohrung nach außen. Die Anordnung weist mehrere konstruktive Merkmale zur Kompensation von Volumenschwankungen in Folge eines Eingefrierens beziehungsweise Schmelzens des Reduktionsmittels bei kaltem Wetter auf. Die Befestigung der Dosierpumpe 4 mittels des elastischen Blechwinkels 61 am Gehäuseblock 400 gewährleistet bei starken Druckschwankungen infolge eines Phasenübergangs des Reduktionsmittels eine Ausgleichsmöglichkeit, indem die Pumpenleitungen 60 mitsamt der Dosierpumpe 4 sich relativ zu den Bohrungen 80 und 82 bewegen und sich somit das Volumen im reduktionsmitteltragenden Leitungssystem automatisch anpassen kann, wenn ansonsten der Gehäuseblock bersten oder Bauteile wie das Dosierventil oder der Drucksensor beschädigt werden könnten. O-Ringdichtungen halten dabei die Leitung weiterhin dicht verschlossen. Der Drucksensor 50 wird ebenfalls, über den biegeweichen elastischen Flansch 51 am Gehäuseblock axial nachgiebig befestigt, durch eine Volumenausdehnung bei Eisbildung nach außen gedrückt. Schmilzt das Eis wieder, fahren der Drucksensor und die Dosierpumpe wieder reversibel in ihre Ausgangslage zurück. Der an sich bekannte und kommerziell erhältliche Druckregler 11 hat eine elastische Membran eingebaut, die zur Umgebungsluft entlastet wird. Diese Membran kann bei Eisbildung elastisch nachgeben und so die Volumenvergrößerung bei Eisbildung ebenfalls kompensieren helfen. Außerdem kann der Gehäuseblock aufgrund seines niedrigen Elastizitätsmoduls zu einem bestimmten Teil den Eisdruck durch Dehnung abfangen. Weitehin dient der luftgefüllte elastische Schlauch 63 zur Verminderung der Umfangsspannung in der Bohrungswandung, indem er beim Gefrieren beispielsweise einer Harnstoff-Wasser-Lösung komprimiert wird und so einen Teil des sich aufbauenden Leitungsdrucks abfangen kann.

In einer alternativen Ausführungsform können auch weitere Bohrungen vorgesehen sein, die Komponenten zur Druckluftbeförderung und -dosierung miteinander verbinden, so daß bei vorgesehener druckluftgestützter Ausbildung eines Aerosols vor Einspritzung in eine Katalysatoranordnung ebenfalls eine kompakte und integrierte Anordnung bereitgestellt werden kann. Hierbei ist dann anstelle des Dosierventils 7 ein Dosierventil zusammen mit einer Mischkammer am Gehäuseblock befestigt, in die das Dosierventil eindosiert und die mit Druckluft beaufschlagt werden kann. Der Ausgang 140 bildet in diesem Falle den Ausgang der Mischkammer. Die Bohrungen sowohl für die Reduktionsmittelleitungen als auch für die Druckluftzufuhr können insbesondere bei Verwendung von Kunststoff auch im Spritzguß hergestellt werden.

Anstelle eines luftgefüllten elastischen Schlauchs 63 können auch andere volumenelastische Elemente verwendet werden, wie beispielsweise gasgefüllte Mikroballons aus Kunststoff, an den Enden verschlossene, mit Gas gefüllte Hohlfasern oder ähnlich einer Druckfeder spiralförmig gewickelte, gasgefüllte Schläuche.

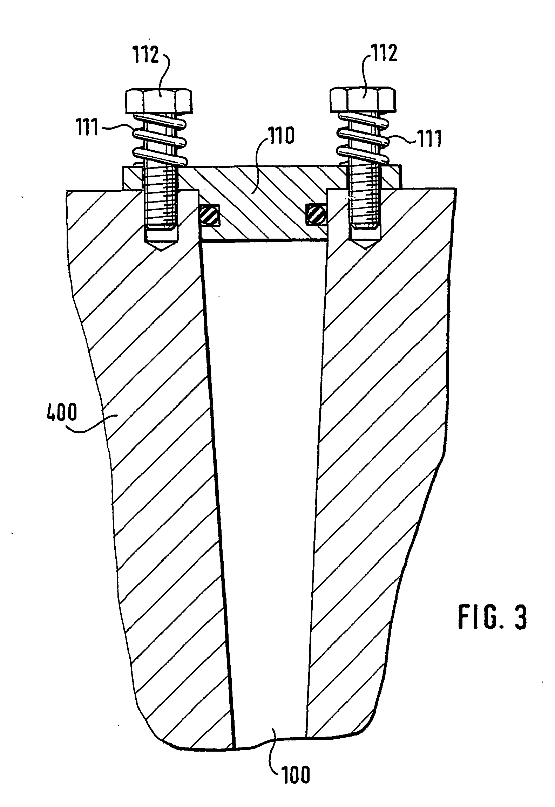

Figur 3 zeigt im Querschnitt die Detailansicht einer alternativen Dosiervorrichtung, bei der eine in eine Kaverne 100 mündende Bohrung vorgesehen ist. Diese Bohrung ist beispielsweise eine mit der Bohrung 80 über eine Eckverbindung in Verbindung stehende Bohrung. Die Kaverne ist als nach außen hin konische Bohrung ausgeführt und mit einem Flansch 110 verschlossen, wobei O-Ringdichtungen eine Abdichtung auch bei sich verändernder Position des Flansches gewährleisten. Dieser ist nämlich über Druckfedern 111 und Schrauben 112 axial beweglich gelagert.

Beim Gefrieren dehnt sich die Flüssigkeit in der Leitung, das heisst in den Bohrungen und damit auch in der in die Kaverne 100 mündenden Bohrung, aus und drückt gegen den Gehäuseblock. In begrenztem Maße geben die Bohrungswandungen, wie oben bereits erläutert, nach. Ein weiteres Ansteigen des Druckes könnte zum Bersten des Gehäuses führen. Die Lagerung des als federndes Element ausgebildeten Flansches 110 ist nun so dimensioniert, dass er rechtzeitig vor einer Berstgefahr durch axiales Auswandern dem Eisdruck nachgibt und somit den Druck in der Bohrung bei Eisbildung begrenzt. Die konische Ausführung der Bohrung resultiert hierbei in einer verstärkt axialen Wirkrichtung des Eisdrucks und führt letzteren auf den federnden Flansch ab. Bei angepasster Dimensionierung der Bauteile kann dieser Vorgang zyklisch beliebig oft wiederholt werden.

Die Kaverne 100 kann auch als Zylinder beziehungsweise als Zylinder mit mehrfach gestuftem Innendurchmesser ausgeführt sein, das heisst durch den Randbereich der Bohrung selbst oder durch einen zylindrischen Hohlraum mit im Vergleich zur Bohrung unterschiedlichen, insbesondere größeren Durchmesser gebildet werden. Die Kaverne kann auch jede andere formbare Geometrie aufweisen.

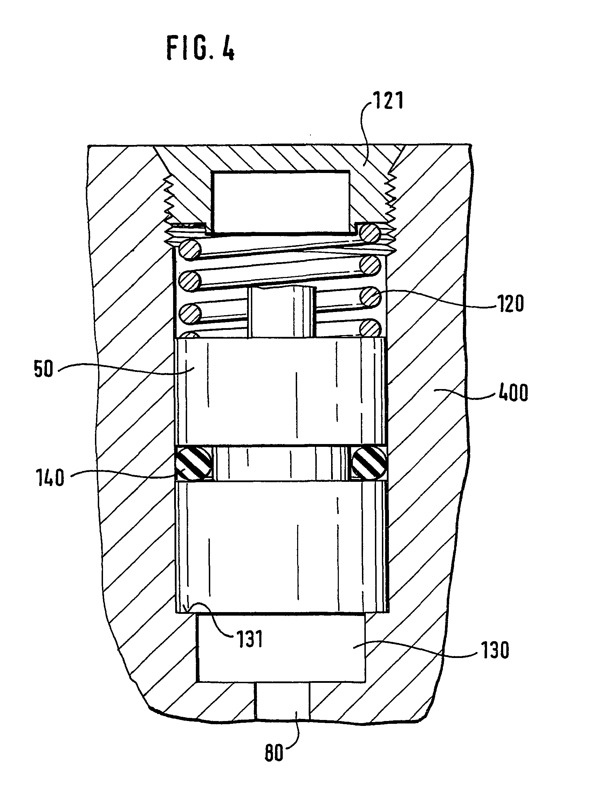

Figur 4 illustriert eine alternative, axial bewegliche Befestigung des Drucksensors 50. Eine Druckfeder 120 drückt ihn an eine Bohrungsstufe 131 der Sensorbohrung 130. Die Druckfeder 120 stützt sich hierbei an einem Gewindering 121 ab, der am Gehäuseblock 400 befestigt ist. Eine O-Ringdichtung 140 in einer radialen Vertiefung des Drucksensors gewährleistet eine Abdichtung des durch die Bohrung 80 und die Sensorbohrung 130 gebildeten Flüssigkeitsvolumens.

Beim Gefrieren der Harnstoff-Wasser-Lösung steigt infolge einer Volumenausdehnung der Druck in der Bohrung 80 und der im Durchmesser erweiterten Sensorbohrung 130, bis die Federkraft der Druckfeder 120 erreicht wird. Dann verschiebt sich der Drucksensor 50 entgegen der Federkraft und vergrößert das Volumen in der Sensorbohrung 130. Durch diese Einbauvariante wird sowohl der Drucksensor 50 als auch der Block 400 vor zu hohen Eisdruckbelastungen verschont.

## Patentansprüche

1. Vorrichtung zur Dosierung eines Reduktionsmittels, insbesondere eines Harnstoffs beziehungsweise einer Harnstoff-Wasser-Lösung, mit an einem Gehäuseblock befestigten Mitteln (4, 7,11) zur Zufuhr des Reduktionsmittels in eine Katalysatoranordnung (30) zur Entfernung von Stickoxiden aus den Abgasen insbesondere eines Dieselmotors, wobei die Mittel über eine durch Aussparungen in dem Gehäuseblock (400) gebildete Leitung (12; 80, 81, 82, 83) zum Transport des Reduktionsmittels verbunden sind, wobei die Wandungen der Leitung (12) durch den Gehäuseblock gebildet werden, **dadurch gekennzeichnet, dass** die Mittel oder weitere Funktionskomponenten zumindest teilweise derart mithilfe elastischer Elemente (61, 51) am Gehäuse befestigt und mit der Leitung (12) verbunden sind, daß das betreffende Mittel oder die betreffende Funktionskomponente bei Eisbildung in der Leitung eine Ausgleichsbewegung durchführen kann.

2. Vorrichtung nach Anspruch 1, **dadurch gekennzeichnet, daß** mindestens eine Aussparung (80) den ganzen Gehäuseblock (400) geradlinig durchquert.

3. Vorrichtung nach einem der vorhergehenden Ansprüche, **dadurch gekennzeichnet, daß** zu mindestens einer Aussparung ein Heizelement auf dem Gehäuseblock befestigt oder in dem Gehäuseblock eingebettet ist.

4. Vorrichtung nach einem der vorhergehenden Ansprüche, **dadurch gekennzeichnet, daß** die Aussparungen als Bohrungen ausgebildet sind.

5. Vorrichtung nach Anspruch 4, **dadurch gekennzeichnet, daß** der Gehäuseblock spritzgegossen ist.

6. Vorrichtung nach einem der vorhergehenden Ansprüche, **dadurch gekennzeichnet, daß** der Gehäuseblock aus Kunststoff besteht.

7. Vorrichtung nach Anspruch 6, **dadurch gekennzeichnet, daß** der Kunststoff ein kleines Elastizitätsmodul, insbesondere ein Elastizitätsmodul im Bereich von ca. 1000 N/mm² bis ca. 7000 N/mm² aufweist.

8. Vorrichtung nach einem der vorhergehenden Ansprüche, **dadurch gekennzeichnet, daß** sämtliche Enden der Leitung (12) mit den Mitteln (4, 7,11) beziehungsweise weiteren Funktionskomponenten (1, 14, 50, 110) verbunden sind, so daß keine separaten Verschlußelemente erforderlich sind.

9. Vorrichtung nach einem der vorhergehenden Ansprüche, **dadurch gekennzeichnet, daß** ein Ende der Leitung (12) durch ein als gefederter Flansch (110) ausgebildetes Ausgleichselement verschlossen ist.

10. Vorrichtung nach einem der vorhergehenden Ansprüche, **dadurch gekennzeichnet, daß** die Mittel eine Pumpe (4) umfassen, wobei das die Pumpe befestigende elastische Element als elastischer, am Gehäuseblock befestigter Blechwinkel (61) ausgebildet ist.

11. Vorrichtung nach einem der vorhergehenden Ansprüche, **dadurch gekennzeichnet, daß** die Funktionskomponenten einen Drucksensor (50) umfassen, der federnd am Gehäuse befestigt und dicht verschiebbar die Leitung (12) verschließt.

12. Vorrichtung nach einer der vorhergehenden Ansprüche, **dadurch gekennzeichnet, daß** die Mittel einen eine bei Eisbildung druckausgleichend wirkende Membran aufweisenden Druckregler (11) umfassen.

13. Vorrichtung nach einem der vorhergehenden Ansprüche, **dadurch gekennzeichnet, daß** in der Leitung mindestens ein volumelastisches Bauteil, insbesondere ein luftgefülltes Element (63), angeordnet ist.

## Claims

1. Device for dosing a reducing agent, in particular urea or a urea-water solution, having means (4, 7, 11), which are fastened to a housing block, for supplying the reducing agent into a catalytic converter arrangement (30) for removing nitrogen oxides from the exhaust gases in particular of a diesel engine, with the means being connected via a line (12; 80, 81, 82, 83), which is formed by cutouts in the housing block (400), for transporting the reducing agent, with the walls of the line (12) being formed by the housing block, **characterized in that** the means or further functional components are fastened to the housing, and connected to the line (12), at least partially by means of elastic elements (61, 51) in such a way that the means in question or the functional components in question can perform a compensating movement in the line in the event of the formation of ice.

2. Device according to Claim 1, **characterized in that** at least one cutout (80) extends rectilinearly through the entire housing block (400).

3. Device according to one of the preceding claims, **characterized in that**, at at least one cutout, a heating element is fastened to the housing block or embedded in the housing block.

4. Device according to one of the preceding claims, **characterized in that** the cutouts are formed as bores.

5. Device according to Claim 4, **characterized in that** the housing block is injection-moulded.

6. Device according to one of the preceding claims, **characterized in that** the housing block is composed of plastic.

7. Device according to Claim 6, **characterized in that** the plastic has a small modulus of elasticity, in particular a modulus of elasticity in the range from approximately 1000 N/mm² to approximately 7000 N/mm².

8. Device according to one of the preceding claims, **characterized in that** all the ends of the line (12) are connected to the means (4, 7, 11) or further functional components (1, 14, 50, 110), such that no separate closure elements are required.

9. Device according to one of the preceding claims, **characterized in that** one end of the line (12) is closed off by a compensating element which is embodied as a spring-loaded flange (110).

10. Device according to one of the preceding claims, **characterized in that** the means (4) comprise a pump, with the elastic element which fastens the pump being embodied as an elastic sheet-metal angle (61) which is fastened to the housing block.

11. Device according to one of the preceding claims, **characterized in that** the functional components comprise a pressure sensor (50) which is resiliently fastened to the housing and which sealingly closes off the line (12) in a movable manner.

12. Device according to one of the preceding claims, **characterized in that** the means comprise a pressure regulator (11) which has a diaphragm which acts in a pressure-compensating fashion in the event of the formation of ice.

13. Device according to one of the preceding claims, **characterized in that** at least one component which is elastic in terms of volume, in particular an air-filled element (63), is arranged in the line.

## Revendications

1. Dispositif pour le dosage d'un agent de réduction, notamment d'une urée ou d'une solution d'eau et d'urée, comprenant des moyens (4, 7, 11) fixés à un bloc-boîtier pour l'alimentation de l'agent de réduction dans un agencement de catalyseur (30) pour l'élimination d'oxydes d'azote des gaz d'échappement, en particulier d'un moteur diesel, les moyens étant connectés par le biais d'une conduite (12 ; 80, 81, 82, 93) formée par des évidements dans le bloc-boîtier (400) en vue du transport de l'agent de réduction, les parois de la conduite (12) étant formées par le bloc-boîtier, **caractérisé en ce que** les moyens ou d'autre composants fonctionnels sont fixés au boîtier au moins en partie à l'aide d'éléments élastiques (61, 51) et sont connectés à la conduite (12) de telle sorte que le moyen concerné ou le composant fonctionnel concerné puisse effectuer un mouvement de compensation lors de la formation de givre dans la conduite.

2. Dispositif selon la revendication 1, **caractérisé en ce qu'**au moins un évidement (80) traverse en ligne droite tout le bloc-boîtier (400).

3. Dispositif selon l'une quelconque des revendications précédentes, **caractérisé en ce que** pour chaque au moins un évidement, un élément chauffant est fixé sur le bloc-boîtier ou est encastré dans le bloc-boîtier.

4. Dispositif selon l'une quelconque des revendications précédentes, **caractérisé en ce que** les évidements sont réalisés sous forme d'alésages.

5. Dispositif selon la revendication 4, **caractérisé en ce que** le bloc-boîtier est moulé par injection.

6. Dispositif selon l'une quelconque des revendications précédentes, **caractérisé en ce que** le bloc-boîtier se compose de plastique.

7. Dispositif selon la revendication 6, **caractérisé en ce que** le plastique présente un petit module d'élasticité, notamment un module d'élasticité de l'ordre d'environ 1000 N/mm² à environ 7000 N/mm².

8. Dispositif selon l'une quelconque des revendications précédentes, **caractérisé en ce que** toutes les extrémités de la conduite (12) sont connectées aux moyens (4, 7, 11) ou aux autres composants fonctionnels (1, 14, 50, 110) de sorte qu'aucun élément de fermeture séparé ne soit nécessaire.

9. Dispositif selon l'une quelconque des revendications précédentes, **caractérisé en ce qu'**une extrémité de la conduite (12) est fermée par un élément de compensation réalisé sous forme de bride à ressort (110).

10. Dispositif selon l'une quelconque des revendications précédentes, **caractérisé en ce que** les moyens comprennent une pompe (4), l'élément élastique fixant la pompe étant réalisé sous forme de coin en tôle élastique (61) fixé au bloc-boîtier.

11. Dispositif selon l'une quelconque des revendications précédentes, **caractérisé en ce que** les composants fonctionnels comprennent un capteur de pression (50) qui est fixé de manière élastique au boîtier et qui ferme la conduite (12) de manière déplaçable hermétiquement.

12. Dispositif selon l'une quelconque des revendications précédentes, **caractérisé en ce que** les moyens comprennent un régulateur de pression (11) présentant une membrane agissant avec un effet de compensation de la pression lors de la formation de givre.

13. Dispositif selon l'une quelconque des revendications précédentes, **caractérisé en ce qu'**au moins un composant de volume élastique, notamment un élément rempli d'air (63), est disposé dans la conduite.
